# EUROPEAN PATENT APPLICATION

(11) **EP 4 844 897 A1**
(43) Date of publication of application: **25.11.2026**
(21) Application number: 26173923.9
(22) Date of filing: 22.04.2026
(51) Int. Cl.: H01M 50/105, H01M 50/538, H01M 50/543, H01M 50/548

(54) **BATTERY CELL**

(30) Priority: 19.05.2025 JP 2025083451
(71) Applicant: Toyota Jidosha Kabushiki Kaisha, Toyota-shi, Aichi-ken 471-8571 (JP)
(72) Inventor: ONO, Masato, Toyota-shi, Aichi-ken,, 471-8571 (JP); SUGIHARA, Atsushi, Toyota-shi, Aichi-ken,, 471-8571 (JP); NAKASHIMA, Satoshi, Toyota-shi, Aichi-ken,, 471-8571 (JP); HAGA, Masayoshi, Toyota-shi, Aichi-ken,, 471-8571 (JP); IZUMI, Jun, Toyota-shi, Aichi-ken,, 471-8571 (JP); ISHIZUKA, Masahiro, Toyota-shi, Aichi-ken,, 471-8571 (JP); MIYAHARA, Kenta, Toyota-shi, Aichi-ken,, 471-8571 (JP)
(74) Representative: Winter, Brandl - Partnerschaft mbB

(57) **Abstract**

A battery cell (10) includes: a stack having a structure including a plurality of electrode sheets stacked, the stack including a first surface (22s1) on a first side in a stacking direction, and a first side surface in a direction intersecting the stacking direction; a first foil bundle portion (24) disposed on the first side surface, the first foil bundle portion (24) including the electrode sheets bundled together; a first conductor member electrically connected to the first foil bundle portion (24); and an exterior body (30) made of a film material, the exterior body (30) housing the stack and the first foil bundle portion (24), the exterior body (30) including a first opening (OP1) on the first surface (22s1) of the stack, in which the first foil bundle portion (24) or the first conductor member is exposed to the outside through the first opening (OP1) of the exterior body (30).

## Description

### BACKGROUND OF THE INVENTION

### 1. Field of the Invention

A technology disclosed in the present specification relates to a battery cell.

### 2. Description of Related Art

An electricity storage element of a battery cell disclosed in Japanese Unexamined Patent Application Publication No. 2025-18622 (JP 2025-18622 A) includes an electrode stack and a foil bundle portion. The electrode stack has a structure in which a plurality of positive electrode current collector foils and a plurality of negative electrode current collector foils are stacked. The foil bundle portion is the portion in which the positive electrode current collector foils or the negative electrode current collector foils are bundled together. The foil bundle portion projects from a side surface of the electrode stack. An electrode plate is also called a current collector plate and is joined to the foil bundle portion. The electrode plate is a terminal that outputs voltage of the battery cell.

### SUMMARY OF THE INVENTION

In the battery cell of JP 2025-18622 A, the foil bundle portion is disposed in a direction intersecting a stacking direction of the electrode stack (hereinbelow, referred to as the lateral direction). The electrode plate extends in the lateral direction from its joint position to the foil bundle portion. Thus, in the structure of the battery cell of JP 2025-18622 A, the distance from the side surface of the electrode stack to a tip of the electrode plate is long, which increases the size of the battery cell. The present specification proposes a technology that downsizes the battery cell.

A battery cell according to a first aspect of the present disclosure includes a stack having a structure including a plurality of electrode sheets stacked. The stack includes a first surface on a first side in a stacking direction, and a first side surface in a direction intersecting the stacking direction. The battery cell includes a first foil bundle portion disposed on the first side surface. The first foil bundle portion includes the electrode sheets bundled together. The battery cell includes a first conductor member electrically connected to the first foil bundle portion. The battery cell includes an exterior body made of a film material. The exterior body houses the stack and the first foil bundle portion and includes a first opening on the first surface of the stack. The first foil bundle portion or the first conductor member is exposed to the outside through the first opening of the exterior body.

In the above structure, the stack includes the first surface in the stacking direction. The exterior body includes the first opening on the first surface. Since the first foil bundle portion or the first conductor member is exposed in the first opening, it is possible to output voltage of the battery cell. This enables the structure for outputting the voltage of the battery cell to be configured such that the structure does not project from the first side surface. The dimension of the battery cell in the direction intersecting the stacking direction (i.e., the lateral direction) can be made short. This enables downsizing of the battery cell.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view of a battery cell 10;
FIG. 2 is a top view of the battery cell 10;
FIG. 3 is a partial sectional view taken along line III-III in FIG. 2;
FIG. 4 is a partial sectional view taken along line IV-IV in FIG. 2;
FIG. 5 is a sectional view before an exterior body is sealed;
FIG. 6 is an explanatory diagram of a method of producing a battery cell of an embodiment;
FIG. 7 is a diagram showing a structure in which the battery cells 10 are stacked;
FIG. 8 is a sectional view of a battery cell of a comparative example corresponding to FIG. 3; and
FIG. 9 is a partial sectional view of a battery cell 10 of a second embodiment.

### DETAILED DESCRIPTION OF EMBODIMENTS

The battery cell of an example disclosed in the present specification may further include a first electrode portion. The first electrode portion may be electrically connected to the first foil bundle portion as the first conductor member, and a part of the first electrode portion may be exposed to the outside through the first opening of the exterior body.

This configuration enables the strength and reliability of a part that performs electrical connection to the outside to be enhanced.

In the battery cell of an example disclosed in the present specification, the first electrode portion may extend from the first side surface to the first surface of the stack and may be joined to the first foil bundle portion on the first side surface.

This configuration enables a wiring structure to be simplified.

In the battery cell of an example disclosed in the present specification, the first foil bundle portion may extend from the first side surface to the first surface of the stack and may be exposed to the outside through the first opening of the exterior body.

This configuration enables the first foil bundle portion to also function as an electrode pad for performing electrical connection to the outside. Downsizing and cost reduction of the battery cell can be achieved.

In the battery cell of an example disclosed in the present specification, the exterior body may be provided with a welded region disposed surrounding the periphery of the first opening. The welded region may weld the exterior body and the first foil bundle portion together or weld the exterior body and the first conductor member together.

This configuration enables the first opening to be sealed.

In the battery cell of an example disclosed in the present specification, the electrode sheets may include a plurality of positive electrode sheets, and a plurality of negative electrode sheets. The first foil bundle portion may include the positive electrode sheets bundled together. The stack may include a second surface on a second side in the stacking direction, and a second side surface that is a side surface in a direction intersecting the stacking direction and on a side opposite to the first side surface. The battery cell may further include a second foil bundle portion. The second foil bundle portion may be disposed on the second side surface and may include the negative electrode sheets bundled together. The exterior body may include a second opening on the second surface of the stack. The second foil bundle portion or a second conductor member electrically connected to the second foil bundle portion may be exposed to the outside in the second opening.

The battery cell of an example disclosed in the present specification may further include a second electrode portion. The second electrode portion may be electrically connected to the second foil bundle portion as the second conductor member, and a part of the second electrode portion may be exposed to the outside through the second opening of the exterior body.

In the battery cell of an example disclosed in the present specification, the second foil bundle portion may extend from the second side surface to the second surface of the stack and may be exposed to the outside through the second opening of the exterior body.

In the battery cell of an example disclosed in the present specification, the distance from the first side surface of the stack to the first opening of the exterior body may be equal to the distance from the second side surface of the stack to the second opening of the exterior body.

This configuration enables a series connection to be constructed simply by stacking the battery cells.

### First Embodiment

### Structure of Battery Cell 10

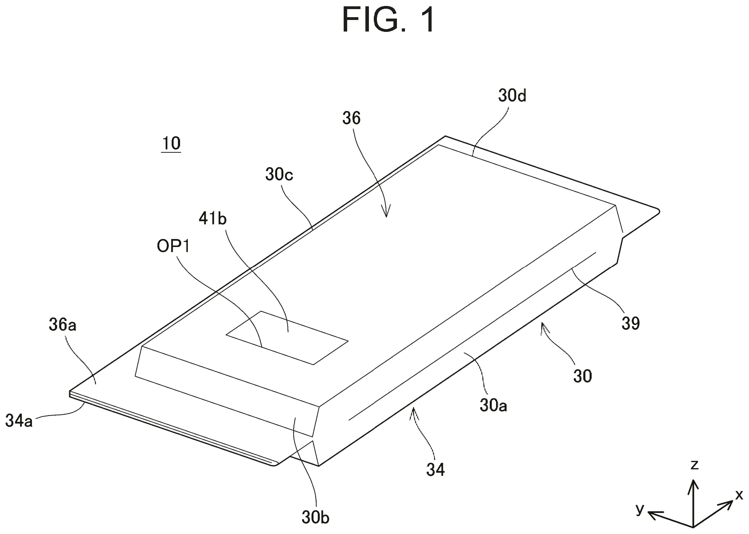

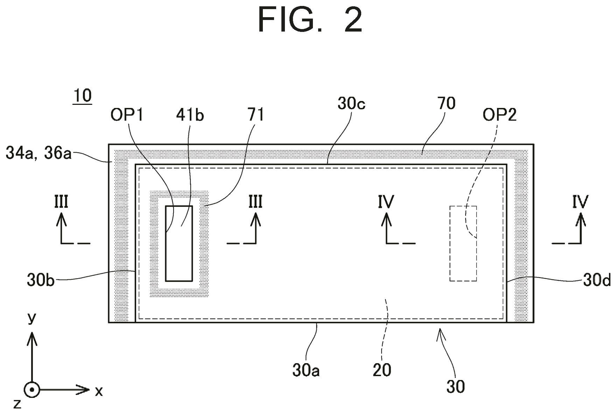

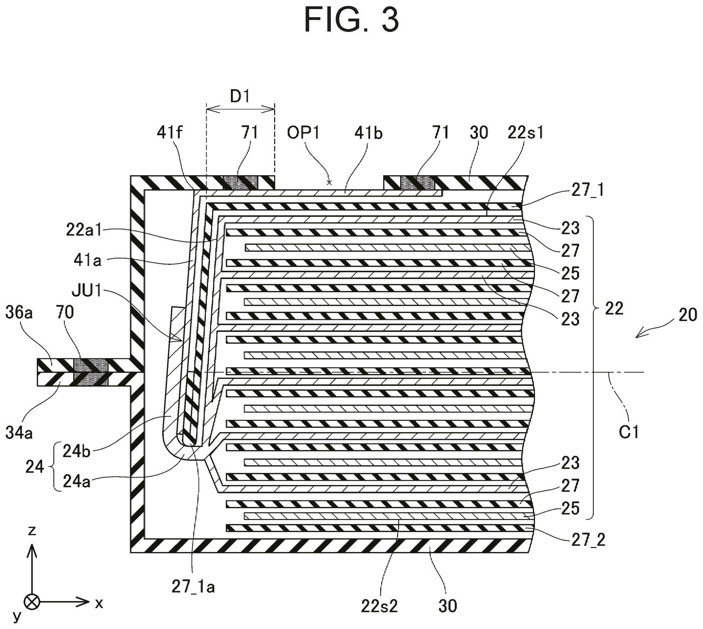

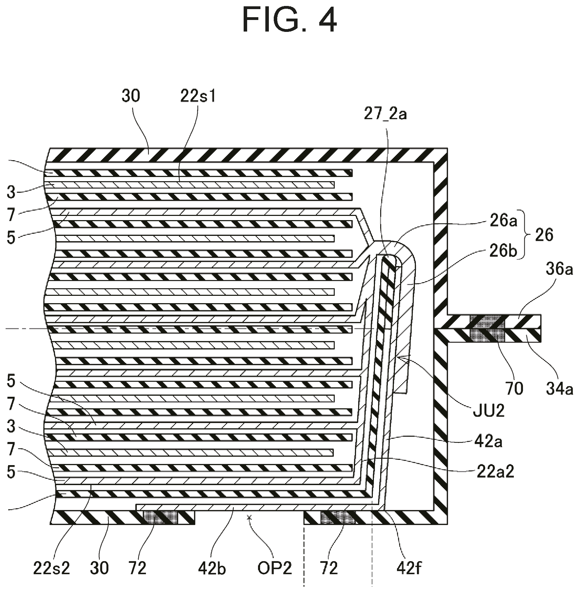

FIG. 1 shows a perspective view of the battery cell 10. FIG. 2 shows a top view of the battery cell 10. FIG. 3 shows a partial sectional view taken along line III-III in FIG. 2. FIG. 3 is a sectional view at an end portion of the battery cell 10 on a -x-direction side. FIG. 4 shows a partial sectional view taken along line IV-IV in FIG. 2. FIG. 4 is a sectional view at an end portion of the battery cell 10 on a +x-direction side. Note that in FIGS. 1 to 4, the thickness direction of the battery cell 10 is referred to as the z-direction, the longitudinal direction of the battery cell 10 is referred to as the x-direction, and the direction perpendicular to both the z-direction and the x-direction is referred to as the y-direction. In addition, for members that are repeatedly disposed, a reference sign may be representatively assigned to one of the members. The same applies to the other drawings.

As shown in FIG. 1, the battery cell 10 of the embodiment has a rectangular flat plate shape. When the battery cell 10 is used, the battery cells 10 are stacked in the z-direction to constitute a battery module. As shown in FIG. 2, the battery cell 10 includes an exterior body 30, and an electricity storage element 20 housed inside the exterior body 30. The exterior body 30 includes a frame portion 36a and a frame portion 34a. A welded portion 70 is provided in a portion where the frame portion 36a and the frame portion 34a overlap. In FIG. 2, the welded portion 70 is indicated by dot hatching. The welded portion 70 is a region in which the frame portion 34a and the frame portion 36a are bonded to each other by thermal welding. The exterior body 30 is sealed by the welded portion 70.

As shown in FIGS. 1, 2, the exterior body 30 includes side surfaces 30a to 30d. The side surfaces 30a, 30c are side surfaces extending along the x-direction. The side surfaces 30b, 30d are side surfaces extending along the y-direction. A first opening OP1 is provided on a surface of the exterior body 30 in the +z-direction. A second opening OP2 is provided on a surface of the exterior body 30 in the -z-direction. Note that in FIG. 2, the hidden second opening OP2 is indicated by a dotted line.

The electricity storage element 20 is a rechargeable battery element, and outputs direct current voltage. The electricity storage element 20 is immersed in an electrolyte that fills the inside of the exterior body 30. As shown in FIGS. 3 and 4, the electricity storage element 20 includes an electrode stack 22, a first foil bundle portion 24, and a second foil bundle portion 26. The electrode stack 22 is a stack including positive electrode current collector foils 23 and negative electrode current collector foils 25 that are alternately stacked with separators 27 interposed therebetween. The positive electrode current collector foils 23, the negative electrode current collector foils 25, and the separators 27 are stacked in the z-direction.

As shown in FIG. 3, an end of the separator 27 in the -x-direction projects in the -x-direction relative to an end of the negative electrode current collector foil 25 in the -x-direction. In addition, as shown in FIG. 4, an end of the separator 27 in the +x-direction projects in the +x-direction relative to an end of the positive electrode current collector foil 23 in the +x-direction. This enables the separator 27 to reliably prevent a short circuit between the positive electrode current collector foil 23 and the negative electrode current collector foil 25.

The electrode stack 22 includes a first surface 22s1 and a second surface 22s2, and a first side surface 22a1 and a second side surface 22a2. The first surface 22s1 is the surface on a first side in the stacking direction (the +z-direction side). The second surface 22s2 is the surface on a second side in the stacking direction (the -z- direction side). The first side surface 22a1 is the side surface in the direction intersecting the stacking direction (the -x-direction). The second side surface 22a2 is the side surface in the direction opposite to the first side surface 22a1 (the +x-direction).

As shown in FIG. 3, the first foil bundle portion 24 is a portion including the positive electrode current collector foils 23 bundled together. The first foil bundle portion 24 is provided on the first side surface 22a1 of the electrode stack 22. As shown in FIG. 4, the second foil bundle portion 26 is a portion including the negative electrode current collector foils 25 bundled together. The second foil bundle portion 26 is provided on the second side surface 22a2 of the electrode stack 22. Note that in FIGS. 3 and 4, the state in which the current collector foils are bundled together is shown as one current collector foil in a simplified manner.

The structures of the first foil bundle portion 24 and a first electrode portion 41 will be described with reference to FIG. 3. A center C1 is the center of the electrode stack 22 in the stacking direction. The first foil bundle portion 24 is connected to the first side surface 22a1 of the electrode stack 22 at a position offset in the -z-direction from the center C1. The first foil bundle portion 24 includes a bent portion 24a and a plate-shaped portion 24b. The bent portion 24a is a portion of the first foil bundle portion 24 bent along the y-direction. The first foil bundle portion 24 is bent at an approximately right angle at the bent portion 24a. Thus, in the xz section, the plate-shaped portion 24b extends along the stacking direction of the electrode stack 22 (z-direction). The plate-shaped portion 24b extends upward (i.e., toward the +z-direction side) from the bent portion 24a along the first side surface 22a1 of the electrode stack 22.

A first separator 27_1 continuously covers the first surface 22s1, the first side surface 22a1, and the plate-shaped portion 24b. The first separator 27_1 includes a bent portion 27_1a. The first separator 27_1 is bent at approximately 180° at the bent portion 27_1a. The bent portion 27_1a of the first separator 27_1 is located at the bent portion 24a of the first foil bundle portion 24. That is, the first separator 27_1 and the first foil bundle portion 24 have an integrally bent shape.

The first electrode portion 41 is a conductor member electrically connected to the first foil bundle portion 24. The first electrode portion 41 extends from the first side surface 22a1 to the first surface 22s1. The first electrode portion 41 is a metal plate including a bent portion 41f. The bent portion 41f is a portion of the first electrode portion 41 bent along the y-direction. The first electrode portion 41 is bent at an approximately right angle at the bent portion 41f. Thus, in the xz section, the first electrode portion 41 has an L-shape. The first electrode portion 41 includes plate portions 41a and 41b provided on both sides of the bent portion 41f. The plate portion 41a of the first electrode portion 41 extends in the +z-direction along the first side surface 22a1. The first separator 27_1 is disposed between the plate portion 41a and the first side surface 22a1. The plate portion 41a is in contact with an inner side surface (+x-direction side surface) of the plate-shaped portion 24b. At a joint portion JU1 where the plate portion 41a and the plate-shaped portion 24b are in contact with each other, the plate portion 41a is joined to the plate-shaped portion 24b. In addition, the plate portion 41b of the first electrode portion 41 extends in the +x-direction from the bent portion 41f along the first surface 22s1. The first separator 27_1 is disposed between the plate portion 41b and the first surface 22s1.

The exterior body 30 includes the first opening OP1 on the first surface 22s1 of the electrode stack 22. The first opening OP1 is open within an area in which the first electrode portion 41 is disposed. The distance from the first opening OP1 to the first side surface 22a1 of the electrode stack 22 is a distance D1. In the first opening OP1, the first electrode portion 41 is exposed to the outside. The welded portion 71 is disposed surrounding the periphery of the first opening OP1. In FIGS. 2 and 3, the welded portion 71 is indicated by dot hatching. The welded portion 71 is a region in which the exterior body 30 and the first electrode portion 41 are connected by thermal welding. The first opening OP1 is sealed by the welded portion 71.

The structures of the second foil bundle portion 26 and a second electrode portion 42 will be described with reference to FIG. 4. The structure in FIG. 4 corresponds to the structure in FIG. 3 rotated by 180° about the y-axis. That is, the second foil bundle portion 26 and the second electrode portion 42 in FIG. 4 are point-symmetric with respect to the first foil bundle portion 24 and the first electrode portion 41 in FIG. 3. Thus, hereinbelow, only differences from FIG. 3 will be described.

The second foil bundle portion 26 is connected to the second side surface 22a2 of the electrode stack 22. The second foil bundle portion 26 includes a bent portion 26a and a plate-shaped portion 26b. The second foil bundle portion 26 is bent at an approximately right angle at the bent portion 26a. A second separator 27_2 continuously covers the second surface 22s2, the second side surface 22a2, and the plate-shaped portion 26b.

The second electrode portion 42 extends from the second side surface 22a2 to the second surface 22s2. The second electrode portion 42 includes plate portions 42a and 42b provided on both sides of the bent portion 42f. The plate portion 42a extends in the -z-direction along the second side surface 22a2. The plate portion 42a is in contact with an inner side surface of the plate-shaped portion 26b. At a joint portion JU2 where the plate portion 42a and the plate-shaped portion 26b are in contact with each other, the plate portion 42a is joined to the plate-shaped portion 26b. In addition, the plate portion 42b of the second electrode portion 42 extends in the -x-direction from the bent portion 42f along the second surface 22s2.

The exterior body 30 includes the second opening OP2 on the second surface 22s2 of the electrode stack 22. The distance from the second opening OP2 to the second side surface 22a2 of the electrode stack 22 is a distance D2. The distance D2 is equal to the distance D1 described above. In the second opening OP2, the second electrode portion 42 is exposed to the outside. The welded portion 72 is disposed surrounding the periphery of the second opening OP2. In FIG. 4, the welded portion 72 is indicated by dot hatching. The second opening OP2 is sealed by the welded portion 72.

### Structure of Exterior Body 30

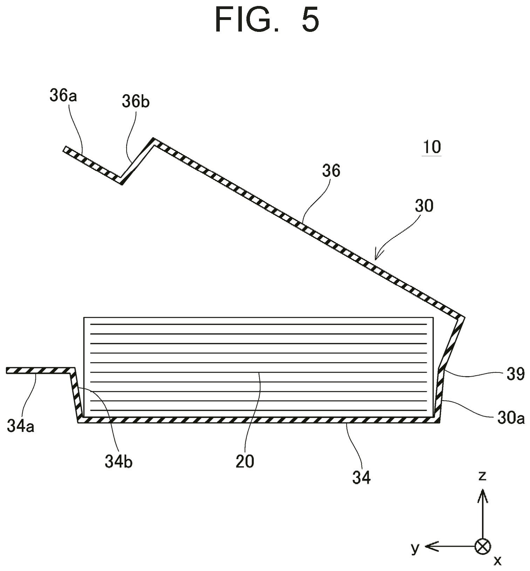

FIG. 5 is a sectional view of the battery cell 10 before the exterior body 30 is sealed. As shown in FIG. 5, the exterior body 30 is made of a thin film. The film constituting the exterior body 30 is a laminate film including aluminum foil and a resin coating film provided on both surfaces of the aluminum foil. The film constituting the exterior body 30 is formed in a container shape including a bottom portion 34 and a lid portion 36 by embossing. A crease 39 is provided on a side surface 30a of the exterior body 30. The lid portion 36 can pivot about the crease 39 relative to the bottom portion 34. The bottom portion 34 includes a frame portion 34a and a cup portion 34b. The cup portion 34b has a cup shape having a recess on its upper face. The frame portion 34a is a flat portion provided around the cup portion 34b. As shown in FIG. 1, the frame portion 34a is provided around the cup portion 34b except the side surface 30a.

As shown in FIG. 5, the electricity storage element 20 is disposed inside the cup portion 34b. The lid portion 36 includes a frame portion 36a and a cap portion 36b. The cap portion 36b has a cap shape having a recess on its lower face. The frame portion 36a is a flat portion provided around the cap portion 36b. As shown in FIG. 1, the frame portion 36a is provided around the cap portion 36b except the side surface 30a. When the lid portion 36 is closed, the cap portion 36b covers an upper part of the electricity storage element 20. In addition, when the lid portion 36 is closed, as shown in FIG. 1, the frame portion 36a is stacked on the frame portion 34a.

### Method of Producing Battery Cell 10

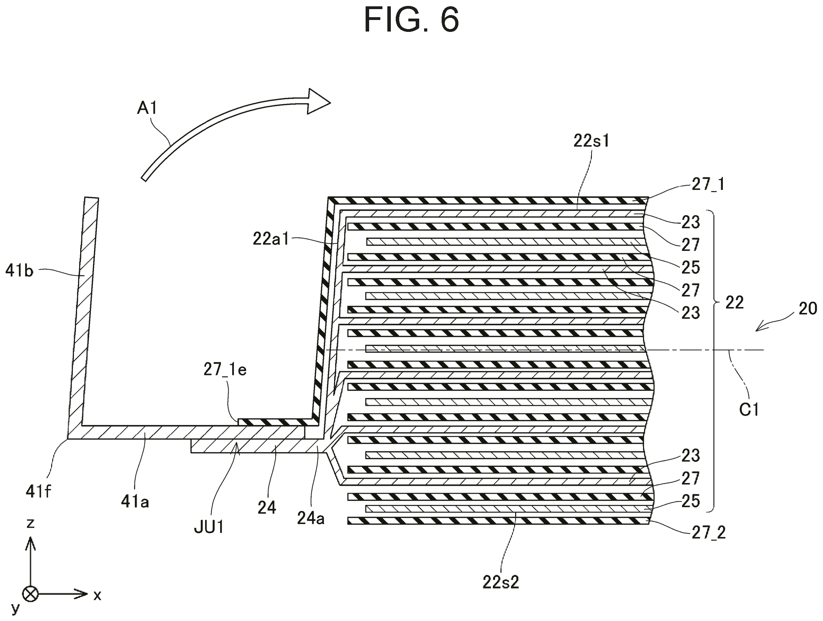

As shown in FIG. 6, the electricity storage element 20 is assembled. FIG. 6 is a sectional view at the same position as FIG. 3. At this stage, the first foil bundle portion 24 linearly extends along the x-direction from the first side surface 22a1 of the electrode stack 22. The plate portion 41a of the L-shaped first electrode portion 41 is brought into contact with an upper surface of the first foil bundle portion 24. Then, the plate portion 41a is joined to the first foil bundle portion 24 by laser welding or the like. Consequently, the joint portion JU1 is formed.

Next, as shown in FIG. 6, the first separator 27_1 is disposed covering the first surface 22s1, the first side surface 22a1, and the plate portion 41a. At this time, an end portion 27_1e of the first separator 27_1 in the -x-direction is located on an upper surface of the plate portion 41a. Then, the first foil bundle portion 24 is bent such that the plate portion 41b becomes parallel to the x-direction. Specifically, as indicated by arrow A1 in FIG. 6, the first electrode portion 41 is pivoted by approximately 90° about the bent portion 24a of the first foil bundle portion 24 serving as a pivot point around the y-axis. At this time, the first separator 27_1 is also bent together. In the bent state, the plate portion 41a is in contact with the first side surface 22a1 with the first separator 27_1 interposed therebetween, and the plate portion 41b is in contact with the first surface 22s1 with first separator 27_1 interposed therebetween (refer to FIG. 3).

Then, the electricity storage element 20 is housed inside the exterior body 30. The exterior body 30 is welded by the welded portion 70. In addition, the first opening OP1 is sealed by the welded portion 71, and the second opening OP2 is sealed by the welded portion 72. Consequently, the battery cell 10 is completed. This method can easily produce the battery cell 10.

### Stacked Structure of Battery Cell 10

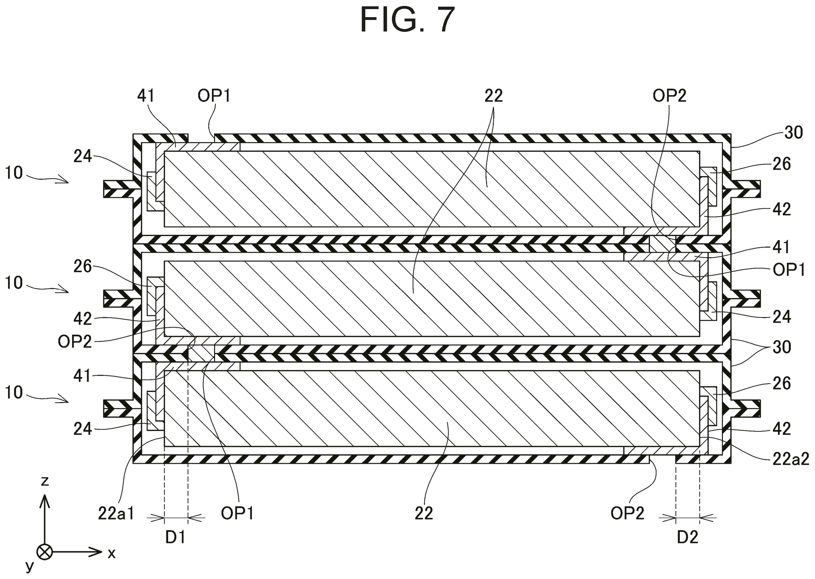

The sectional view of FIG. 7 shows a structure in which the battery cells 10 are stacked. As described above, the distance from the first opening OP1 to the first side surface 22a1 is the distance D1. In addition, the distance from the second opening OP2 to the second side surface 22a2 is the distance D2. The distances D1 and D2 are equal to each other. Thus, when the battery cells 10 are stacked, the x-direction positions of the first opening OP1 and the second opening OP2 can be aligned. Consequently, the first electrode portion 41 (positive electrode) in the first opening OP1 and the second electrode portion 42 (negative electrode) in the second opening OP2 can be electrically connected to each other by stacking the battery cells 10. That is, simply by stacking the battery cells 10, a series connection can be constructed. It is possible to simplify connection wiring between the battery cells 10.

### Effects

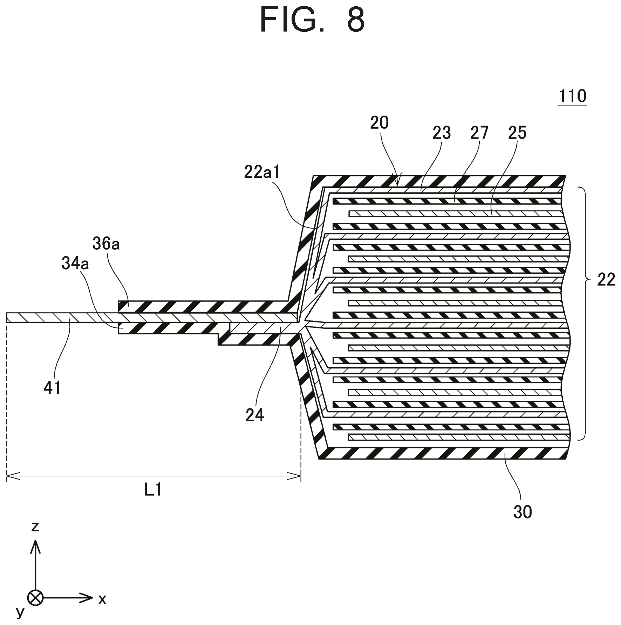

The problem to be solved will be described using a battery cell 110 of a comparative example in FIG. 8. FIG. 8 is a sectional view in a part similar to that in FIG. 3. In addition, parts common between the battery cell 110 of the comparative example (FIG. 8) and the battery cell 10 of the present embodiment (FIG. 3) are designated by the same reference signs. In the battery cell 110 of the comparative example, the first electrode portion 41 has a flat plate shape extending along the x-direction. The first electrode portion 41 projects in the -x-direction from the inside of the exterior body 30 through an interface between the frame portion 36a and the frame portion 34a. That is, the dimension of the battery cell 110 on the -x-direction side increases by a distance L1 from the first side surface 22a1 to the tip of the first electrode portion 41. In addition, in the battery cell 110 of the comparative example, the second electrode portion 42 (not shown) has a flat plate shape extending along the x-direction, and projects in the +x-direction from the inside of the exterior body 30. Thus, the dimension of the battery cell 110 on the +x-direction side increases.

On the other hand, the structure of the battery cell 10 in the present embodiment includes the first opening OP1 (FIG. 3) on the first surface 22s1 and includes the second opening OP2 (FIG. 4) on the second surface 22s2. In addition, the first electrode portion 41 is exposed inside the first opening OP1, and the second electrode portion 42 is exposed inside the second opening OP2. This enables the first electrode portion 41 and the second electrode portion 42 to be configured such that the first electrode portion 41 and the second electrode portion 42 do not project from the first side surface 22a1 and the second side surface 22a2. The dimension of the battery cell 10 of the present embodiment in the x-direction (i.e., the lateral direction) can be made shorter than that of the battery cell 110 of the comparative example. Since the battery cell 10 can be downsized, when the battery cells 10 are stacked to constitute the battery module, the size of the battery module can be reduced. Thus, the battery module can store electric power with a high energy density.

In the battery cell 10 of the present embodiment, the first electrode portion 41 is electrically connected to the first foil bundle portion 24. The first electrode portion 41 is exposed to the outside through the first opening OP1. This enables the first electrode portion 41 to perform electrical connection to the outside. In addition, the first electrode portion 41 is a member having a higher mechanical strength than the first foil bundle portion 24. Thus, it is possible to enhance the strength and reliability of a part that performs electrical connection to the outside. Note that a similar effect can also be obtained in the second electrode portion 42.

In the battery cell 10 of the present embodiment, the first electrode portion 41 is joined to the first foil bundle portion 24 on the first side surface 22a1 and is exposed inside the first opening OP1 on the first surface 22s1. This enables the first electrode portion 41 to function as a wire extending from the first foil bundle portion 24 to the first opening OP1. The wiring structure can be simplified. Note that a similar effect can also be obtained in the second electrode portion 42.

### Second Embodiment

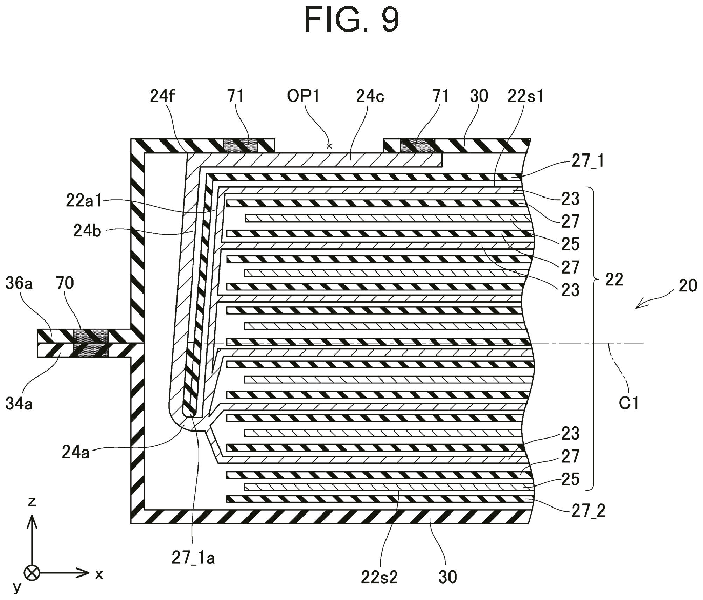

In a second embodiment, a configuration in which the first foil bundle portion 24 is exposed to the outside through the first opening OP1 will be described. Parts common between the first and second embodiments are designated by the same reference signs to omit redundant description. FIG. 9 shows a sectional view in the second embodiment. FIG. 9 (second embodiment) shows a section of the same part as in FIG. 3 (first embodiment). Note that in the following, only the portions specific to the second embodiment will be described.

In a battery cell 10 of the second embodiment, the first electrode portion 41 is not provided. The first foil bundle portion 24 extends from the first side surface 22a1 to the first surface 22s1. Specifically, the first foil bundle portion 24 further includes a bent portion 24f. The first foil bundle portion 24 is bent at an approximately right angle at the bent portion 24f. The first foil bundle portion 24 includes plate-shaped portions 24b and 24c provided on both sides of the bent portion 24f. The plate-shaped portion 24b extends in the +z-direction along the first side surface 22a1. The plate-shaped portion 24c extends in the +x-direction from the bent portion 24f along the first surface 22s1. The first foil bundle portion 24 is exposed to the outside in the first opening OP1. Note that the second foil bundle portion 26 may also have a similar structure to the first foil bundle portion 24 described above.

In the structure of the second embodiment, the first foil bundle portion 24 can also function as an electrode pad for performing electrical connection to the outside. Since it is not necessary to additionally provide a component for the electrode pad, downsizing and cost reduction of the battery cell 10 can be achieved. Note that a similar effect to the first foil bundle portion 24 can also be achieved in the second foil bundle portion 26.

### Modifications

The shape and structure of the first electrode portion 41 may vary. For example, the first electrode portion 41 may be divided into a plurality of components.

The structure of the joint portion JU1 (FIG. 3) may vary. For example, the plate portion 41a of the first electrode portion 41 may be joined to an outer side surface (the -x-direction side surface) of the plate-shaped portion 24b of the first foil bundle portion 24. The battery cell 10 can also be downsized in this configuration.

In addition, in the above embodiments, in the xz section, the plate portion 41a and the plate-shaped portion 24b extend parallel to the stacking direction of the electrode stack 22 (i.e., the z-direction). However, the plate portion 41a and the plate-shaped portion 24b may extend along a direction having a predetermined angle (e.g., an angle of 45 degrees or less) relative to the stacking direction.

The positive electrode current collector foil 23 and the negative electrode current collector foil 25 are examples of the electrode sheet. The electrode stack 22 is an example of the stack. The first electrode portion 41 is an example of the first conductor member. The second electrode portion 42 is an example of the second conductor member.

While the embodiments have been described in detail above, these are merely examples and do not limit the scope of the claims. The technology described in the claims includes various modifications and alterations of the above-described specific examples. The technical elements described in the present specification or the drawings exert technical utility independently or in various combinations, and are not limited to combinations described in the claims at the time of filing the application. In addition, the technology illustrated in the present specification or the drawings achieve a plurality of objects at the same time, and achieving any one of the objects in itself has technical utility.

## Claims

1. A battery cell (10) comprising:
a stack having a structure including a plurality of electrode sheets stacked, the stack including a first surface (22s1) on a first side in a stacking direction, and a first side surface in a direction intersecting the stacking direction;
a first foil bundle portion (24) disposed on the first side surface, the first foil bundle portion (24) including the electrode sheets bundled together;
a first conductor member electrically connected to the first foil bundle portion (24); and
an exterior body (30) made of a film material, the exterior body (30) housing the stack and the first foil bundle portion (24), the exterior body including a first opening (OP1) on the first surface (22s1) of the stack, wherein
the first foil bundle portion (24) or the first conductor member is exposed to an outside through the first opening (OP1) of the exterior body (30).

2. The battery cell (10) according to claim 1, further comprising a first electrode portion (41), wherein:
the first electrode portion (41) is electrically connected to the first foil bundle portion (24) as the first conductor member; and
a part of the first electrode portion (41) is exposed to the outside through the first opening (OP1) of the exterior body (30).

3. The battery cell (10) according to claim 2, wherein the first electrode portion (41) extends from the first side surface to the first surface (22s1) of the stack and is joined to the first foil bundle portion (24) on the first side surface.

4. The battery cell (10) according to claim 1, wherein the first foil bundle portion (24) extends from the first side surface to the first surface (22s1) of the stack and is exposed to the outside through the first opening (OP1) of the exterior body (30).

5. The battery cell (10) according to claim 1, wherein:
the exterior body (30) includes a welded region disposed surrounding a periphery of the first opening (OP1); and
the welded region welds the exterior body (30) and the first foil bundle portion (24) together or welds the exterior body (30) and the first conductor member together.

6. The battery cell (10) according to any one of claims 1 to 5, wherein:
the electrode sheets include a plurality of positive electrode sheets, and a plurality of negative electrode sheets;
the first foil bundle portion (24) includes the positive electrode sheets bundled together;
the stack includes a second surface (22s2) on a second side in the stacking direction, and a second side surface that is a side surface in a direction intersecting the stacking direction and on a side opposite to the first side surface;
the battery cell further includes a second foil bundle portion (26), and a second conductor member electrically connected to the second foil bundle portion (26);
the second foil bundle portion (26) is disposed on the second side surface and includes the negative electrode sheets bundled together;
the exterior body (30) includes a second opening (OP2) on the second surface (22s2) of the stack; and
the second foil bundle portion (26) or the second conductor member is exposed to an outside through the second opening (OP2) of the exterior body (30).

7. The battery cell (10) according to claim 6, further comprising a second electrode portion (42), wherein:
the second electrode portion (42) is electrically connected to the second foil bundle portion (26) as the second conductor member; and
a part of the second electrode portion (42) is exposed to the outside through the second opening (OP2) of the exterior body (30).

8. The battery cell (10) according to claim 6, wherein the second foil bundle portion (26) extends from the second side surface to the second surface (22s2) of the stack and is exposed to the outside through the second opening (OP2) of the exterior body (30).

9. The battery cell (10) according to claim 6, wherein a distance from the first side surface of the stack to the first opening (OP1) of the exterior body (30) is equal to a distance from the second side surface of the stack to the second opening (OP2) of the exterior body (30).
